# EUROPEAN PATENT APPLICATION

(11) **EP 2 829 965 A1**
(43) Date of publication of application: **28.01.2015**
(21) Application number: 14174944.0
(22) Date of filing: 30.06.2014
(51) Int. Cl.: G06F 3/0486, G06F 1/16, G06F 3/0488, H04M 1/02, G06F 3/0354

(54) **Electronic device and method of operating the same**

(30) Priority: 24.07.2013 KR 20130087177
(71) Applicant: Samsung Display Co., Ltd., Yongin-City, Gyeonggi-Do, 446-711 (KR)
(72) Inventor: Lee, Hae-Kang, Seoul (KR); Lee, Yong-Joon, Gyeonggi-do (KR); Lee, Woo-Jong, Gyeonggi-do (KR)
(74) Representative: Walaski, Jan Filip

(57) **Abstract**

An electronic device includes: a touchscreen having a front touchscreen region and at least one side touchscreen region, the side touchscreen region being integrally formed with the front touchscreen region; and a body to which the touchscreen is attached. In one such electronic device, an application program corresponding to a side icon on the side touchscreen region is configured to be displayed on the front touchscreen region when the side icon is moved to an activation icon on the side touchscreen region by a drag-and-drop operation. In another such electronic device, an application program corresponding to a side icon on the side touchscreen region is configured to be displayed on the front touchscreen region when the side icon is moved to the front touchscreen region by a drag-and-drop operation.

## Description

The present invention relates generally to an electronic device and a method of operating the electronic device.

Recently, electronic devices having touchscreen units (or touchscreens), such as cellular phones, smartphones, smart pads, laptops, computers, televisions, etc.) are widely used. In addition, as the technology for manufacturing flexible touchscreens has been developed, many manufacturers try to integrate a flexible touchscreen with an electronic device. Generally, a non-flexible touchscreen is located on a front face of conventional electronic devices, such as smartphones.

However, when a flexible touchscreen is integrated with a smartphone, the flexible touchscreen may cover a side face (region) and/or a rear face (region) of the smartphone as well as a front face (region) of the smartphone. In this case, if a conventional user interface (UI)-by which an icon corresponding to a specific application program is merely touched (e.g., by a user) to execute (or activate, display, or otherwise select) the application program-is used in the smartphone, at least one icon that is displayed on the side face and/or the rear face of the smartphone may be unintentionally touched when the user grabs the smartphone in his hand. As a result, an application program corresponding to the unintentionally touched icon may be erroneously executed, activated, displayed, or otherwise selected.

Aspects of embodiments of the present invention relate generally to an electronic device and a method of operating the electronic device. More particularly, aspects of embodiments of the present invention relate to an electronic device having a touchscreen, and a method of operating the electronic device.

Some example embodiments provide for an electronic device that includes a flexible touchscreen having a front touchscreen region and at least one side (or rear) touchscreen region. The electronic device may prevent (or protect) a specific application program corresponding to at least one icon that is displayed on the side (or rear) touchscreen region from being erroneously executed, activated, displayed, or otherwise selected on the front touchscreen region when the icon is unintentionally touched. Further example embodiments provide for a method of operating the electronic device.

In an embodiment of the present invention, an electronic device is provided. The electronic device includes: a touchscreen having a front touchscreen region and at least one side touchscreen region, the side touchscreen region being integrally formed with the front touchscreen region; and a body to which the touchscreen is attached. An application program corresponding to a side icon on the side touchscreen region is configured to be displayed on the front touchscreen region when the side icon is moved to an activation icon on the side touchscreen region by a drag-and-drop operation.

The touchscreen may be flexible.

The front touchscreen region may correspond to a main touchscreen region on which the application program is displayed, and the side touchscreen region may correspond to a sub touchscreen region on which the side icon is displayed.

The front touchscreen region and the side touchscreen region may each have a flat surface shape.

The front touchscreen region may have a flat surface shape, and the side touchscreen region may have a curved surface shape.

In another embodiment of the present invention, an electronic device is provided. The electronic device includes: a touchscreen having a front touchscreen region and at least one side touchscreen region, the side touchscreen region being integrally formed with the front touchscreen region; and a body to which the touchscreen is attached. An application program corresponding to a side icon on the side touchscreen region is configured to be displayed on the front touchscreen region when the side icon is moved to the front touchscreen region by a drag-and-drop operation.

The drag-and-drop operation may be performed after the side icon is activated in response to a user's input.

The touchscreen may be flexible.

The front touchscreen region may correspond to a main touchscreen region on which the application program is displayed, and the side touchscreen region may correspond to a sub touchscreen region on which the side icon is displayed.

The front touchscreen region and the side touchscreen region may each have a flat surface shape.

The front touchscreen region may have a flat surface shape, and the side touchscreen region may have a curved surface shape.

In yet another embodiment of the present invention, a method of operating an electronic device is provided. The electronic device includes a flexible touchscreen and a body to which the flexible touchscreen is attached. The method includes displaying an activation icon and a side icon on at least one side touchscreen region of the flexible touchscreen, and displaying an application program corresponding to the side icon on a front touchscreen region of the flexible touchscreen when the side icon is moved to the activation icon.

The front touchscreen region may correspond to a main touchscreen region on which the application program is displayed. The side touchscreen region may correspond to a sub touchscreen region on which the side icon is displayed.

The front touchscreen region and the side touchscreen region may each have a flat surface shape.

The front touchscreen region may have a flat surface shape, and the side touchscreen region may have a curved surface shape.

In still yet another exemplary embodiment of the present invention, a method of operating an electronic device is provided. The electronic device includes a flexible touchscreen and a body to which the flexible touchscreen is attached. The method includes displaying a side icon on at least one side touchscreen region of the flexible touchscreen, and displaying an application program corresponding to the side icon on a front touchscreen region of the flexible touchscreen when the side icon is moved to the front touchscreen region.

The method may further include activating the side icon in response to a user's input before allowing the side icon to be moved to the front touchscreen region.

The front touchscreen region may correspond to a main touchscreen region on which the application program is displayed, and the side touchscreen region may correspond to a sub touchscreen region on which the side icon is displayed.

The front touchscreen region and the side touchscreen region may each have a flat surface shape.

The front touchscreen region may have a flat surface shape, and the side touchscreen region may have a curved surface shape.

Aspects of embodiments of the present invention are directed toward an electronic device that includes a flexible touchscreen having a front touchscreen region and at least one side (or rear) touchscreen region, and a method of operating the electronic device. According to example embodiments, such an electronic device may prevent a specific application program corresponding to at least one icon that is displayed on the side (or rear) touchscreen region from being erroneously executed, activated, displayed, or otherwise selected on the front touchscreen region when the icon is unintentionally touched.

Illustrative, non-limiting example embodiments will be more clearly understood from the following detailed description taken in conjunction with the accompanying drawings, in which:
FIG. 1 is a block diagram illustrating an electronic device according to example embodiments.
FIG. 2A is a diagram illustrating an example touchscreen activation of an application program on the electronic device of FIG. 1.
FIG. 2B is a diagram illustrating another example touchscreen activation of an application program on the electronic device of FIG. 1.
FIG. 3 is a diagram illustrating an example of a user grabbing the electronic device of FIG. 1.
FIGS. 4A to 4C are diagrams illustrating examples of the electronic device of FIG. 1 that include a vertically symmetrical touchscreen.
FIGS. 5A to 5C are diagrams illustrating examples of the electronic device of FIG. 1 that include a horizontally symmetrical touchscreen.
FIGS. 6A to 6C are diagrams illustrating examples of the electronic device of FIG. 1 that include a vertically asymmetric touchscreen.
FIGS. 7A to 7C are diagrams illustrating examples of the electronic device of FIG. 1 that include a horizontally asymmetric touchscreen.
FIG. 8 is a flow chart illustrating a method of operating an electronic device according to example embodiments.
FIG. 9 is a flow chart illustrating another method of operating an electronic device according to example embodiments.
FIG. 10 is a block diagram illustrating a computer-readable medium that stores a program according to example embodiments.

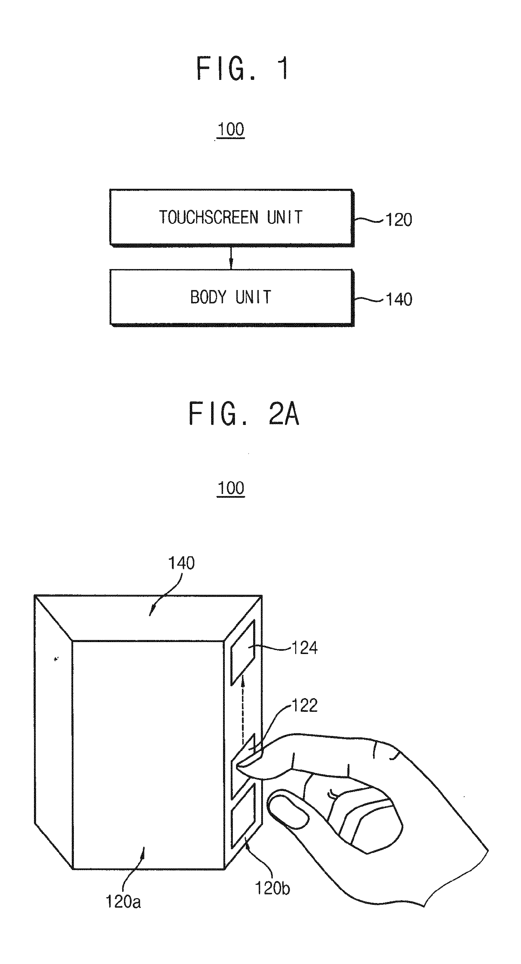

Referring to FIGS. 1 to 3, the electronic device 100 may include a touch-screen unit (or touchscreen) 120 and a body unit (or body) 140 to which the touchscreen 120 is attached or otherwise integrated. Here, the touchscreen 120 may include a display device and a touch sensor device. The electronic device 100 may correspond to a smartphone. However, the kind of electronic device 100 is not limited thereto. For example, the electronic device 100 may be implemented as a cellular phone, a smart pad, a television, a laptop, etc.

The touchscreen 120 may have a front touchscreen region 120a and at least one side (or rear) touchscreen region 120b, where the at least one side touchscreen region 120b is integrally formed with the front touchscreen region 120a. Accordingly, from here on, the touchscreen 120 may be used to refer to the front touchscreen region 120a and the at least one side touchscreen region 120b. Further, the "at least one" term may be dropped when referring to the side touchscreen region 120b, but it is understood that there still may be more than one side touchscreen region 120b.

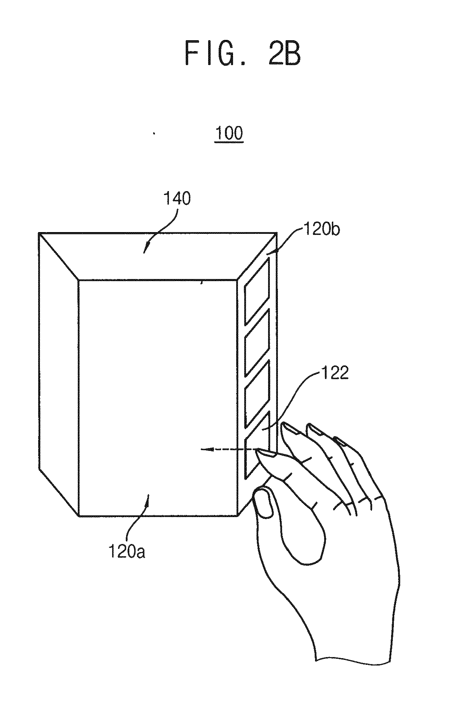

The touchscreen 120 may be flexible. For example, as illustrated in FIGS. 2A and 2B, the touchscreen 120 may have the front touchscreen region 120a and two side touchscreen regions 120b, where the two side touchscreen regions 120b are located at both (left and right) sides of the front touchscreen region 120a. However, a shape of the touchscreen 120 is not limited thereto.

In example embodiments, the front touchscreen region 120a may correspond to a main touchscreen region on which an application program is displayed, and the side touchscreen region 120b may correspond to a sub (subsidiary) touchscreen region on which an icon, also referred to as a side icon, 122 is displayed. That is, the side icon 122 and an activation icon 124 may be displayed on the side touchscreen region 120b. In addition, a specific information notice for users (e.g., a notice of message arrivals, a notice of alert messages, a notice of incoming calls, etc.) may also be displayed on the side touchscreen region 120b. In one example embodiment, as illustrated in FIGS. 2A and 2B, the front touchscreen region 120a and the side touchscreen region 120b may each have a flat surface shape. In another example embodiment, the front touchscreen region 120a may have a flat surface shape, and the side touchscreen region 120b may have a curved surface shape. For example, the side touchscreen region 120b may have a curved surface shape at a boundary region with the front touchscreen region 120a, and a flat surface shape at other regions.

If conventional user interfaces-by which an icon corresponding to a specific application program is merely touched (e.g., by a user) to execute, activate, display, or otherwise select the application program-are used in the electronic device 100, the side icon 122 that is displayed on the side touchscreen region 120b may be unintentionally touched when a user grabs the electronic device 100 in his hand. However, in user interfaces according to example embodiments of the present invention, the electronic device 100 is configured (for example, programmed or wired) to not execute, activate, display, or otherwise select the application program corresponding to the side icon 122 when the side icon 122 of the side touchscreen region 120b is unintentionally touched.

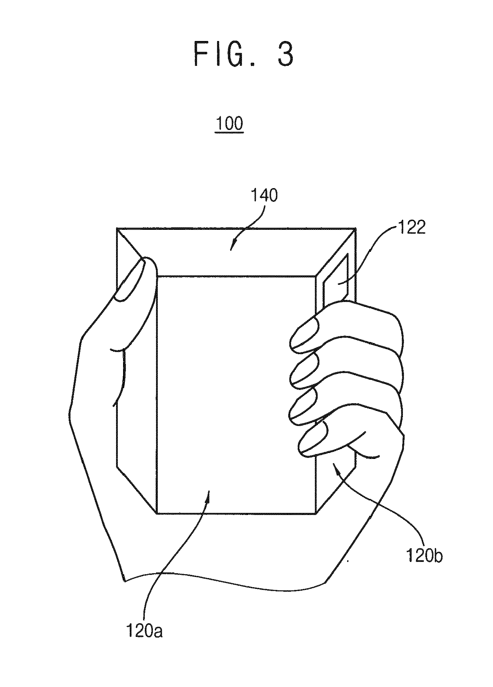

That is, as illustrated in FIG. 3, when at least one side icon 122 is touched when a user grabs the electronic device 100 in his hand, the electronic device 100 may accurately recognize that the user has grabbed the electronic device 100 in his hand. Thus, the electronic device 100 is configured to not execute, activate, display, or otherwise select the application program corresponding to the side icon 122 because the electronic device 100 may recognize that a user does not intend to execute, activate, display, or otherwise select the application program corresponding to the side icon 122. As a result, the electronic device 100 may prevent the application program corresponding to the side icon 122 that is displayed on the side touchscreen region 120b from being erroneously executed, activated, displayed, or otherwise selected.

As described above, the electronic device 100 does not use the conventional user interfaces by which the side icon 122 corresponding to a specific application program is merely touched to execute, activate, display, or otherwise select the application program. In other words, the electronic device 100 may use new user interfaces that may further consider a user's intention to execute, activate, display, or otherwise select a specific application program corresponding to the side icon 122 in connection with the side touchscreen region 120b. Hereinafter, the new user interfaces of the electronic device 100 will be described in more detail with reference to FIGS. 2A and 2B.

In one example embodiment, as illustrated in FIG. 2A, the electronic device 100 may execute, activate, display, or otherwise select an application program corresponding to the side icon 122 of the side touchscreen region 120b on the front touchscreen region 120a when the side icon 122 is moved to the activation icon 124 of the side touchscreen region 120b by, for instance, a drag-and-drop operation. For example, a game application program may be executed, activated, displayed, or otherwise selected on the front touchscreen region 120a when the side icon 122 of the side touchscreen region 120b corresponding to the game application program is moved to the activation icon 124 of the side touchscreen region 120b as a user performs the drag-and-drop operation.

In addition, a message application program may be executed, activated, displayed, or otherwise selected on the front touchscreen region 120a when the side icon 122 of the side touchscreen region 120b indicating message arrivals is moved to the activation icon 124 of the side touchscreen region 120b as a user performs the drag-and-drop operation. Further, a phone call (e.g., video phone call) application program may be executed, activated, displayed, or otherwise selected on the front touchscreen region 120a when the side icon 122 of the side touchscreen region 120b indicating incoming calls is moved to the activation icon 124 of the side touchscreen region 120b as a user performs the drag-and-drop operation.

As described above, the front touchscreen region 120a may correspond to a main touchscreen region on which the application program is displayed, and the side touchscreen region 120b may correspond to a sub touchscreen region on which the side icon 122 is displayed. In some example embodiments, the front touchscreen region 120a may not operate when the side touchscreen region 120b operates. In some example embodiments, the drag-and-drop operation may not be performed on the side touchscreen region 120b when a plurality of side icons 122 are touched at the same time on the side touchscreen region 120b.

In another example embodiment, as illustrated in FIG. 2B, the electronic device 100 may execute, activate, display, or otherwise select an application program corresponding to the side icon 122 of the side touchscreen region 120b on the front touchscreen region 120a when the side icon 122 of the side touchscreen region 120b is moved to the front touchscreen region 120a by, for instance, a drag-and-drop operation. For example, a game application program may be executed, activated, displayed, or otherwise selected on the front touchscreen region 120a when the side icon 122 of the side touchscreen region 120b corresponding to the game application program is moved to the front touchscreen region 120a as a user performs the drag-and-drop operation.

In addition, a message application program may be executed, activated, displayed, or otherwise selected on the front touchscreen region 120a when the side icon 122 of the side touchscreen region 120b indicating message arrivals is moved to the front touchscreen region 120a as a user performs the drag-and-drop operation. Further, a phone call (e.g., video phone call) application program may be executed, activated, displayed, or otherwise selected on the front touchscreen region 120a when the side icon 122 of the side touchscreen region 120b indicating incoming calls is moved to the front touchscreen region 120a as a user performs the drag-and-drop operation.

In further example embodiments, the drag-and-drop operation may be performed only after the side icon 122 is activated in response to a set or predetermined user's input. As described above, the side icon 122 may be unintentionally moved to the front touchscreen region 120a when a user grabs the electronic device 100 in his hand. That is because the front touchscreen region 120a is wider than the side touchscreen region 120b. Hence, the electronic device 100 may require that the side icon 122 be activated prior to the drag-and-drop operation.

For instance, in one example embodiment, the set or predetermined user's input may be a long-touch operation, where a user touches the side icon 122 of the side touchscreen region 120b for a set or predetermined time. In another example embodiment, the set or predetermined user's input may be a tapping operation, where a user taps the side icon 122 of the side touchscreen region 120b once or several times. In still another example embodiment, the set or predetermined user's input may be a pushing operation, where a user pushes (or presses) a physical button of the electronic device 100 (e.g., 'home' button of a smartphone, etc.) to activate the side icon 122 of the side touchscreen region 120b. However, the set or predetermined user's input is not limited thereto, and in other embodiments, may be any recognized activation technique known to one of ordinary skill in the art.

The touchscreen 120 may be attached to or otherwise integrated with the body 140. As described above, since the touchscreen 120 includes the display device (e.g., an organic light emitting display device, etc.) and the touch sensor device (e.g., a capacitive touch sensor device, a resistive touch sensor device, etc.), the body 140 may include at least one controller (e.g., a display controller and/or a touch sensor controller). Here, the controller may control a display function and/or a touch sensor function of the touchscreen 120.

In addition, the body 140 may include an application processor, at least one memory device, at least one nonvolatile storage device, a plurality of function devices, and a plurality of sensors. The application processor may execute programs of computer instructions and perform various computing functions to control overall operations of the electronic device 100. For example, the application processor may be a microprocessor, a central processing unit (CPU), etc.

The sensors may perform various sensing operations of the electronic device 100 and its surroundings. For example, the sensors may include a gyro sensor that measures a rotating angular speed, an acceleration sensor that measures a speed and a momentum, a geomagnetic field sensor that acts as a compass, a barometer sensor that measures altitude, a grip sensor that determines whether a mobile device is gripped by a user, a gesture-proximity-illumination sensor that performs various operations (such as motion recognition, proximity detection, illumination measurement, etc.), and a temperature-humidity sensor that measures temperature and humidity. However, the kinds of sensors are not limited thereto.

The memory device may store data for operations of the electronic device 100 or code (such as program instructions) for execution by the application processor. For example, the memory device may include a volatile semiconductor memory device such as a dynamic random access memory (DRAM) device, a static random access memory (SRAM) device, a mobile DRAM device, etc., and/or a non-volatile semiconductor memory device such as an erasable programmable read-only memory (EPROM) device, an electrically erasable programmable read-only memory (EEPROM) device, a flash memory device, a phase change random access memory (PRAM) device, a resistance random access memory (RRAM) device, a nano floating gate memory (NFGM) device, a polymer random access memory (PoRAM) device, a magnetic random access memory (MRAM) device, a ferroelectric random access memory (FRAM) device, etc.

The nonvolatile storage device may include a solid state drive (SSD) device, a hard disk drive (HDD) device, a CD-ROM device, etc. The nonvolatile storage device may be for longer term storage of programs and data used by the electronic device 100.

The function devices may perform various operations of the electronic device 100. For example, the function devices may include a camera device that performs a camera function, a communication device that performs a communication function (e.g., code division multiple access (CDMA) module, long term evolution (LTE) module, radio frequency (RF) module, ultra wideband (UWB) module, wireless local area network (WLAN) module, worldwide interoperability for microwave access (WIMAX) module, etc.), a global positioning system (GPS) device, a microphone (MIC) device, a speaker device, etc. However, the kinds of function devices included in the electronic device 100 are not limited thereto.

In summary, the electronic device 100 that includes the touchscreen 120 (e.g., a flexible touchscreen) having the front touchscreen region 120a and the side touchscreen region 120b, where the side touchscreen region 120b is integrally formed with the front touchscreen region 120a, may prevent an application program corresponding to the side icon 122 of the side touchscreen region 120b from being erroneously executed, activated, displayed, or otherwise selected on the front touchscreen region 120a when the side icon 122 is unintentionally touched.

Therefore, aspects of the present invention may be applied to any electronic device 100 that includes the touchscreen 120 having the front touchscreen region 120a and the side touchscreen region 120b. In other words, embodiments of the present invention may provide new user interfaces (such as general purpose user interfaces) to the user. Although it is described above that the touchscreen 120 includes the front touchscreen region 120a and the side touchscreen region 120b, the side touchscreen region 120b may be interpreted as a rear touchscreen region of the electronic device 100 in some embodiments.

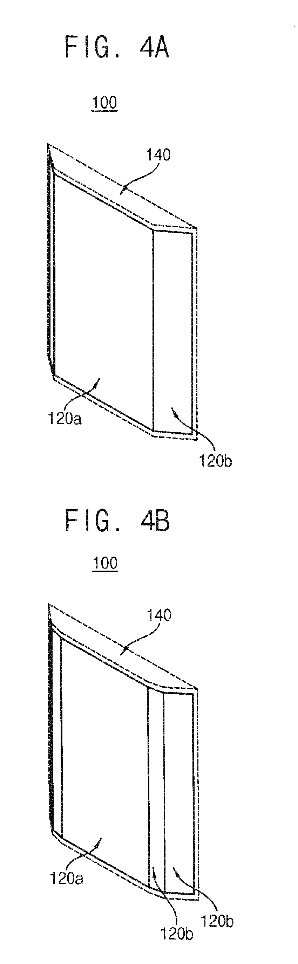

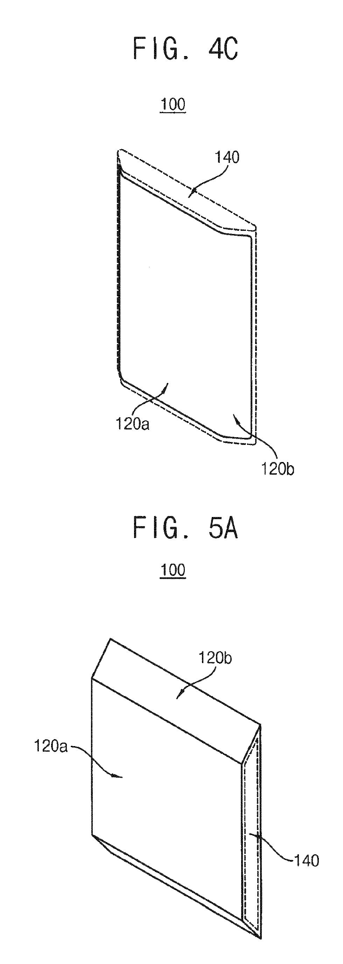

FIGS. 4A to 4C are diagrams illustrating examples of the electronic device 100 of FIG. 1 that include a vertically symmetrical touchscreen. FIGS. 5A to 5C are diagrams illustrating examples of the electronic device 100 of FIG. 1 that include a horizontally symmetrical touchscreen.

Referring to FIGS. 4A to 4C, the electronic device 100 includes a vertically symmetrical touchscreen 120, where the vertically symmetrical touchscreen 120 is flexible. The vertically symmetrical touchscreen 120 may be attached to or otherwise integrated with the body 140. As described above, the front touchscreen region 120a may correspond to a main touchscreen region on which an application program is displayed, and the side touchscreen region 120b may correspond to a sub touchscreen region on which a side icon is displayed.

As illustrated in FIG. 4A, the vertically symmetrical touchscreen 120 may include one front touchscreen region 120a and two side touchscreen regions 120b, where the two side touchscreen regions 120b are located at both sides of the front touchscreen region 120a. That is, one side touchscreen region 120b may be located at a left side of the front touchscreen region 120a, and the other side touchscreen region 120b may be located at a right side of the front touchscreen region 120a. Here, the front touchscreen region 120a may have a flat surface shape, and the two side touchscreen regions 120b may also have a flat surface shape.

As illustrated in FIG. 4B, the vertically symmetrical touchscreen 120 may include one front touchscreen region 120a and four side touchscreen regions 120b, where the four side touchscreen regions 120b are located at both sides of the front touchscreen region 120a. That is, two side touchscreen regions 120b may be located at a left side of the front touchscreen region 120a, and the other two side touchscreen regions 120b may be located at a right side of the front touchscreen region 120a. Here, the front touchscreen region 120a may have a flat surface shape, and the four side touchscreen regions 120b may also have a flat surface shape.

As illustrated in FIG. 4C, the vertically symmetrical touchscreen 120 may include one front touchscreen region 120a and two side touchscreen regions 120b, where the two side touchscreen regions 120b are located at both sides of the front touchscreen region 120a. That is, one side touchscreen region 120b may be located at a left side of the front touchscreen region 120a, and the other side touchscreen region 120b may be located at a right side of the front touchscreen region 120a. Here, the front touchscreen region 120a may have a flat surface shape, and the two side touchscreen regions 120b may have a curved surface shape. For example, the side touchscreen regions 120b may have a curved surface shape at boundary regions with the front touchscreen region 120a, and a flat surface shape at other regions.

Referring to FIGS. 5A to 5C, the electronic device 100 includes a horizontally symmetrical touchscreen 120, where the horizontally symmetrical touchscreen 120 is flexible. The horizontally symmetrical touchscreen 120 may be attached to or otherwise integrated with the body 140. As described above, the front touchscreen region 120a may correspond to a main touchscreen region on which an application program is displayed, and the side touchscreen region 120b may correspond to a sub touchscreen region on which a side icon is displayed.

As illustrated in FIG. 5A, the horizontally symmetrical touchscreen 120 may include one front touchscreen region 120a and two side touchscreen regions 120b, where the two side touchscreen regions 120b are located at both sides of the front touchscreen region 120a. That is, one side touchscreen region 120b may be located at an upper side of the front touchscreen region 120a, and the other side touchscreen region 120b may be located at a lower side of the front touchscreen region 120a. Here, the front touchscreen region 120a may have a flat surface shape, and the two side touchscreen regions 120b may also have a flat surface shape.

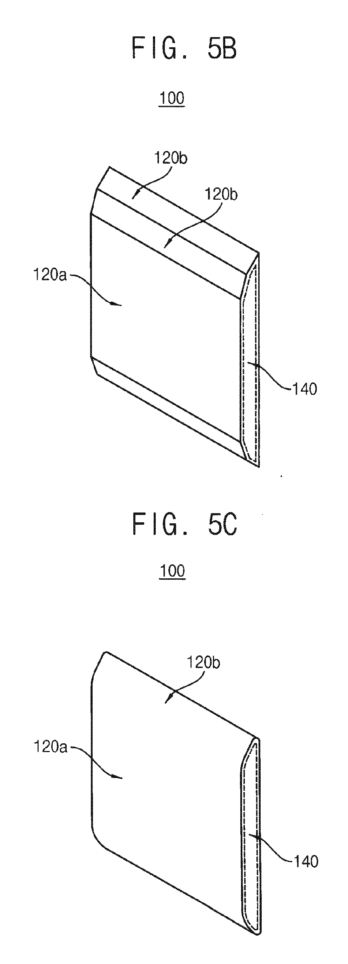

As illustrated in FIG. 5B, the horizontally symmetrical touchscreen 120 may include one front touchscreen region 120a and four side touchscreen regions 120b, where the four side touchscreen regions 120b are located at both sides of the front touchscreen region 120a. That is, two side touchscreen regions 120b may be located at an upper side of the front touchscreen region 120a, and the other two side touchscreen regions 120b may be located at a lower side of the front touchscreen region 120a. Here, the front touchscreen region 120a may have a flat surface shape, and the four side touchscreen regions 120b may also have a flat surface shape.

As illustrated in FIG. 5C, the horizontally symmetrical touchscreen 120 may include one front touchscreen region 120a and two side touchscreen regions 120b, where the two side touchscreen regions 120b are located at both sides of the front touchscreen region 120a. That is, one side touchscreen region 120b may be located at an upper side of the front touchscreen region 120a, and the other side touchscreen region 120b may be located at a lower side of the front touchscreen region 120a. Here, the front touchscreen region 120a may have a flat surface shape, and the two side touchscreen regions 120b may have a curved surface shape. For example, the side touchscreen regions 120b may have a curved surface shape at boundary regions with the front touchscreen region 120a, and a flat surface shape at other regions.

As described above, the touchscreen 120 included in the electronic device 100 may have a vertically symmetrical shape or a horizontally symmetrical shape. In some example embodiments, the touchscreen 120 included in the electronic device 100 may have a vertically and horizontally symmetrical shape. In this case, the touchscreen 120 may have one front touchscreen region 120a and multiple side touchscreen regions 120b, where the multiple side touchscreen regions 120b are located at all sides (e.g., a left side, a right side, an upper side, and a lower side) of the front touchscreen region 120a.

However, a symmetrical shape of the touchscreen 120 is not limited to the symmetrical shapes of FIGS. 4A to 5C or other symmetrical shapes discussed above. For example, although it is illustrated in FIGS. 4A to 5C that the touchscreen 120 has a convex shape (in a sense that the front touchscreen region 120a protrudes compared to the side touchscreen regions 120b), the touchscreen 120 may have a concave shape (or have no concavity or convexity) in other embodiments.

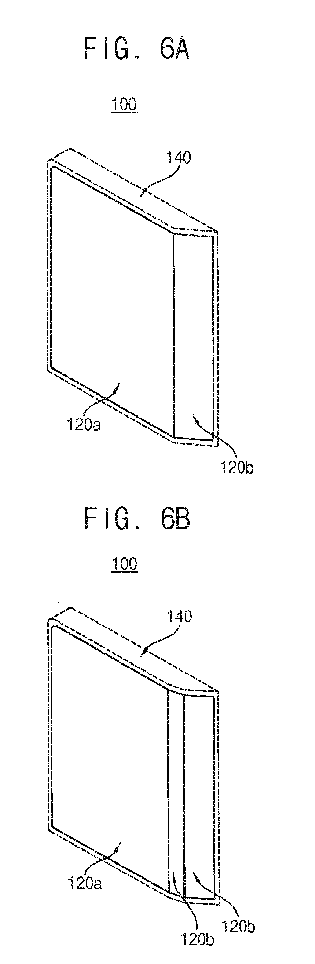

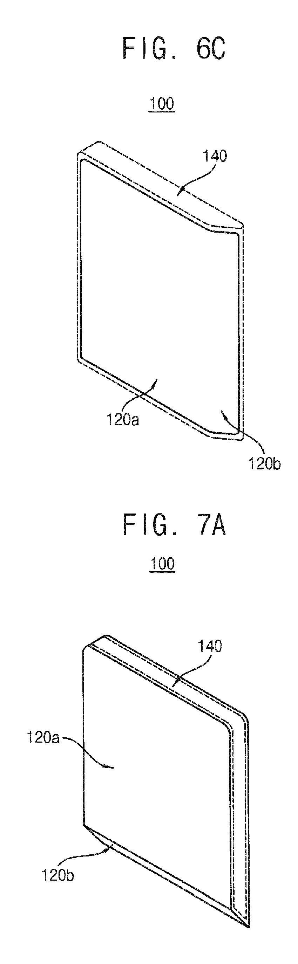

FIGS. 6A to 6C are diagrams illustrating examples of the electronic device 100 of FIG. 1 that include a vertically asymmetric touchscreen. FIGS. 7A to 7C are diagrams illustrating examples of the electronic device 100 of FIG. 1 that include a horizontally asymmetric touchscreen.

Referring to FIGS. 6A to 6C, the electronic device 100 includes a vertically asymmetric touchscreen 120, where the vertically asymmetric touchscreen 120 is flexible. The vertically asymmetric touchscreen 120 may be attached to or otherwise integrated with the body 140. As described above, the front touchscreen region 120a may correspond to a main touchscreen region on which an application program is displayed, and the side touchscreen region 120b may correspond to a sub touchscreen region on which a side icon is displayed.

As illustrated in FIG. 6A, the vertically asymmetric touchscreen 120 may include one front touchscreen region 120a and one side touchscreen region 120b, where the side touchscreen region 120b is located at one side (e.g., a right side) of the front touchscreen region 120a. Here, the front touchscreen region 120a may have a flat surface shape, and the side touchscreen region 120b may also have a flat surface shape.

As illustrated in FIG. 6B, the vertically asymmetric touchscreen 120 may include one front touchscreen region 120a and two side touchscreen regions 120b, where the two side touchscreen regions 120b are located at one side (e.g., a right side) of the front touchscreen region 120a. Here, the front touchscreen region 120a may have a flat surface shape, and the two side touchscreen regions 120b may also have a flat surface shape.

As illustrated in FIG. 6C, the vertically asymmetric touchscreen 120 may include one front touchscreen region 120a and one side touchscreen region 120b, where the side touchscreen region 120b is located at one side (e.g., a right side) of the front touchscreen region 120a. Here, the front touchscreen region 120a may have a flat surface shape, and the side touchscreen region 120b may have a curved surface shape. For example, the side touchscreen region 120b may have a curved surface shape at boundary regions with the front touchscreen region 120a, and a flat surface shape at other regions.

Referring to FIGS. 7A to 7C, the electronic device 100 includes a horizontally asymmetric touchscreen 120, where the horizontally asymmetric touchscreen 120 is flexible. The horizontally asymmetric touchscreen 120 may be attached to or otherwise integrated with the body 140. As described above, the front touchscreen region 120a may correspond to a main touchscreen region on which an application program is displayed, and the side touchscreen region 120b may correspond to a sub touchscreen region on which a side icon is displayed.

As illustrated in FIG. 7A, the horizontally asymmetric touchscreen 120 may include one front touchscreen region 120a and one side touchscreen region 120b, where the side touchscreen region 120b is located at one side (e.g., a lower side) of the front touchscreen region 120a. Here, the front touchscreen region 120a may have a flat surface shape, and the side touchscreen region 120b may also have a flat surface shape.

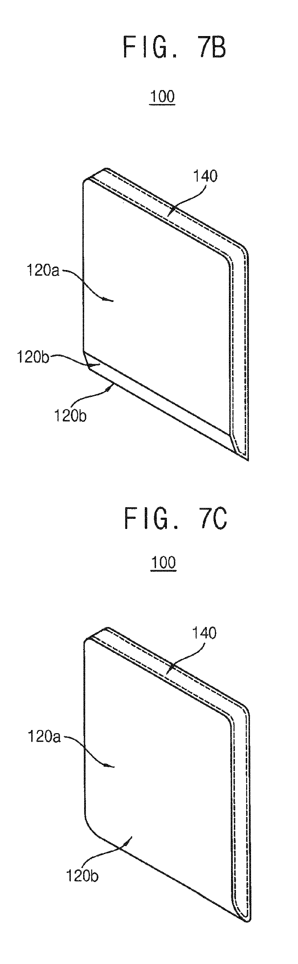

As illustrated in FIG. 7B, the horizontally asymmetric touchscreen 120 may include one front touchscreen region 120a and two side touchscreen regions 120b, where the two side touchscreen regions 120b are located at one side (e.g., a lower side) of the front touchscreen region 120a. Here, the front touchscreen region 120a may have a flat surface shape, and the two side touchscreen regions 120b may also have a flat surface shape.

As illustrated in FIG. 7C, the horizontally asymmetric touchscreen 120 may include one front touchscreen region 120a and one side touchscreen region 120b, where the side touchscreen region 120b is located at one side (e.g., a lower side) of the front touchscreen region 120a. Here, the front touchscreen region 120a may have a flat surface shape, and the side touchscreen region 120b may have a curved surface shape. For example, the side touchscreen regions 120b may have a curved surface shape at boundary regions with the front touchscreen region 120a, and a flat surface shape at other regions.

As described above, the touchscreen 120 included in the electronic device 100 may have a vertically asymmetric shape or a horizontally asymmetric shape. In some example embodiments, the touchscreen 120 included in the electronic device 100 may have a vertically and horizontally asymmetric shape. However, an asymmetric shape of the touchscreen 120 is not limited to asymmetric shapes of FIGS. 6A to 7C or other asymmetrical shapes described above. For example, although it is illustrated in FIGS. 6A to 7C that the touchscreen 120 has a convex shape (in a sense that the front touchscreen region 120a protrudes compared to the side touchscreen region 120b), the touchscreen 120 may have a concave shape (or have no concavity or convexity) in other embodiments.

In addition, the touchscreen 120 (e.g., the vertically asymmetric touchscreen or the horizontally asymmetric touchscreen) may include one front touchscreen region 120a and multiple side touchscreen regions 120b, where a shape of one side touchscreen region 120b that is located at one side (e.g., a right side or a lower side) of the front touchscreen region 120a is different from a shape of another side touchscreen region 120b that is located at another side (e.g., a left side or an upper side) of the front touchscreen region 120a.

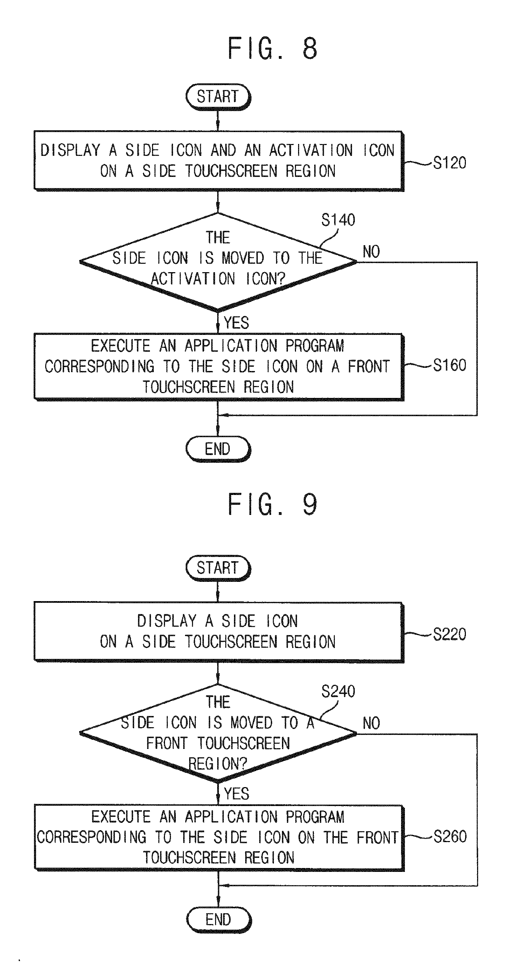

FIG. 8 is a flow chart illustrating a method of operating an electronic device according to example embodiments. This and other methods of operating an electronic device may be implemented as computer programs including instructions that are stored on the nonvolatile storage device and executed on the application processor of the electronic device.

Referring to FIG. 8, the method of FIG. 8 may operate the electronic device that includes a flexible touchscreen and a body to which the flexible touchscreen is attached. Here, the flexible touchscreen may have a front touchscreen region and at least one side touchscreen region, where the side touchscreen region is integrally formed with the front touchscreen region. In one example embodiment, the front touchscreen region and the side touchscreen region may each have a flat surface shape. In another example embodiment, the front touchscreen region may have a flat surface shape, and the side touchscreen region may have a curved surface shape. In example embodiments, the front touchscreen region may correspond to a main touchscreen region on which an application program is displayed, and the side touchscreen region may correspond to a sub touchscreen region on which a side icon is displayed.

In further detail, the method of FIG. 8 may display the side icon and an activation icon on the side touchscreen region of the flexible touchscreen (S120), and may check whether the side icon is moved to the activation icon on the side touchscreen region (S140). For example, the method of FIG. 8 may check a drag-and-drop operation by which the side icon is moved to the activation icon on the side touchscreen region (e.g., by a user). Here, when the side icon is moved to the activation icon on the side touchscreen region, the method of FIG. 8 may execute, activate, display, or otherwise select an application program corresponding to the side icon on the front touchscreen region of the flexible touchscreen (S160).

On the other hand, unless the side icon is moved to the activation icon on the side touchscreen region, the method of FIG. 8 may determine that the user does not intend to execute, activate, display, or otherwise select the application program corresponding to the side icon. As a result, the application program corresponding to the side icon may not be executed, activated, displayed, or otherwise selected on the front touchscreen region when the side icon on the side touchscreen region is just touched as the user grabs the electronic device (e.g., smartphone, etc.) in his hand. Thus, in the electronic device that includes the flexible touchscreen having the front touchscreen region and the side touchscreen region, the method of FIG. 8 may prevent (or protect) a specific application program corresponding to the side icon that is displayed on the side touchscreen region from being erroneously executed, activated, displayed, or otherwise selected on the front touchscreen region when the side icon is unintentionally touched.

FIG. 9 is a flow chart illustrating another method of operating an electronic device according to example embodiments.

Referring to FIG. 9, the method of FIG. 9 may operate the electronic device that includes a flexible touchscreen and a body to which the flexible touchscreen is attached. Here, the flexible touchscreen may have a front touchscreen region and at least one side touchscreen region, where the side touchscreen region is integrally formed with the front touchscreen region. In one example embodiment, the front touchscreen region and the side touchscreen region may each have a flat surface shape. In another example embodiment, the front touchscreen region may have a flat surface shape, and the side touchscreen region may have a curved surface shape. In example embodiments, the front touchscreen region may correspond to a main touchscreen region on which an application program is displayed, and the side touchscreen region may correspond to a sub touchscreen region on which a side icon is displayed.

In further detail, the method of FIG. 9 may display the side icon on the side touchscreen region of the flexible touchscreen (S220), and may check whether the side icon is moved to the front touchscreen region of the flexible touchscreen (S240). That is, the method of FIG. 9 may check a drag-and-drop operation by which the side icon is moved to the front touchscreen region of the flexible touchscreen (e.g., by a user). Here, when the side icon is moved to the front touchscreen region of the flexible touchscreen, the method of FIG. 9 may execute, activate, display, or otherwise select an application program corresponding to the side icon on the front touchscreen region of the flexible touchscreen (S260).

On the other hand, unless the side icon is moved to the front touchscreen region of the flexible touchscreen, the method of FIG. 9 may determine that the user does not intend to execute, activate, display, or otherwise select the application program corresponding to the side icon. As a result, the application program corresponding to the side icon may not be executed, activated, displayed, or otherwise selected on the front touchscreen region when the side icon on the side touchscreen region is just touched as the user grabs the electronic device (e.g., smartphone, etc.) in his hand.

In further example embodiments, the drag-and-drop operation may be performed after the side icon is activated in response to a set or predetermined user's input. For instance, in one example embodiment, the set or predetermined user's input may be a long-touch operation, where a user touches the side icon for a set or predetermined time. In another example embodiment, the set or predetermined user's input may be a tapping operation, where a user taps the side icon once or several times. In still another example embodiment, the set or predetermined user's input may be a pushing operation, where a user pushes (or presses) a physical button of the electronic device to activate the side icon. However, the set or predetermined user's input is not limited thereto.

Thus, in the electronic device that includes the flexible touchscreen having the front touchscreen region and the side touchscreen region, the method of FIG. 9 may prevent a specific application program corresponding to the side icon that is displayed on the side touchscreen region from being erroneously executed, activated, displayed, or otherwise selected on the front touchscreen region when the side icon is unintentionally touched.

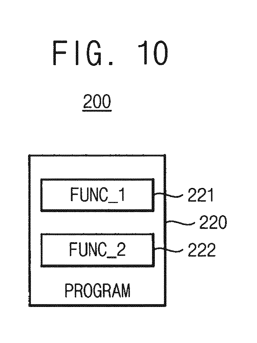

FIG. 10 is a block diagram illustrating a nonvolatile or non-transitory computer-readable medium that stores a program according to example embodiments.

Referring to FIG. 10, the computer-readable medium 200 may store a program 220 for operating an electronic device that includes a flexible touchscreen and a body to which the flexible touchscreen is attached. As described above, the flexible touchscreen may have a front touchscreen region and at least one side touchscreen region, where the side touchscreen region is integrally formed with the front touchscreen region. In example embodiments, the front touchscreen region may correspond to a main touchscreen region on which an application program is displayed, and the side touchscreen region may correspond to a sub touchscreen region on which a side icon is displayed.

In one example embodiment, the computer-readable medium 200 that stores the program 220 may implement a first function 221 for displaying the side icon and an activation icon on the side touchscreen region of the flexible touchscreen, and a second function 222 for executing, activating, displaying, or otherwise selecting an application program corresponding to the side icon on the front touchscreen region of the flexible touchscreen when the side icon is moved to the activation icon on the side touchscreen region of the flexible touchscreen. In another example embodiment, the computer-readable medium 200 that stores the program 220 may implement a first function 221 for displaying the side icon on the side touchscreen region of the flexible touchscreen, and a second function 222 for executing, activating, displaying, or otherwise selecting an application program corresponding to the side icon on the front touchscreen region of the flexible touchscreen when the side icon is moved to the front touchscreen region of the flexible touchscreen.

As a result, in the electronic device that includes the flexible touchscreen having the front touchscreen region and the side (or rear) touchscreen region, the computer-readable medium 200 that stores the program 220 may prevent a specific application program corresponding to the side icon on the side touchscreen region from being erroneously executed, activated, displayed, or otherwise selected on the front touchscreen region when the side icon is unintentionally touched. Since further details of these operations are described above, duplicated descriptions will not be repeated.

Although a few example embodiments (e.g., an electronic device, a method of operating the electronic device, and a computer-readable medium that stores a program) have been described, those skilled in the art will readily appreciate that many modifications are possible to the example embodiments without materially departing from the novel teachings and features of the present invention.

Aspects of the present invention may be applied to any electronic device (e.g., a mobile device) that includes a flexible touchscreen. For example, aspects of the present invention may be applied to a cellular phone, a smartphone, a smart pad, a personal digital assistant (PDA), a portable multimedia player (PMP), an MP3 player, a television, a computer monitor, a laptop, a digital camera, a camcorder, a game console, etc.

The foregoing is illustrative of example embodiments and is not to be construed as limiting thereof. Although a few example embodiments have been described, those skilled in the art will readily appreciate that many modifications are possible to the example embodiments without materially departing from the novel teachings and features of the present invention as defined in the claims.

## Claims

1. An electronic device comprising:
a touchscreen having a front touchscreen region and at least one side touchscreen region, the side touchscreen region being integrally formed with the front touchscreen region; and
a body to which the touchscreen is attached,
wherein an application program corresponding to a side icon on the side touchscreen region is configured to be displayed on the front touchscreen region when the side icon is moved to an activation icon on the side touchscreen region by a drag-and-drop operation.

2. The device of claim 1, wherein the front touchscreen region corresponds to a main touchscreen region on which the application program is displayed, and the side touchscreen region corresponds to a subsidiary touchscreen region on which the side icon is displayed.

3. The device of claim 1 or 2, wherein the front touchscreen region and the side touchscreen region each have a flat surface shape.

4. The device of claim 1 or 2, wherein the front touchscreen region has a flat surface shape, and the side touchscreen region has a curved surface shape.

5. An electronic device comprising:
a touchscreen having a front touchscreen region and at least one side touchscreen region, the side touchscreen region being integrally formed with the front touchscreen region; and
a body to which the touchscreen is attached,
wherein an application program corresponding to a side icon on the side touchscreen region is configured to be displayed on the front touchscreen region when the side icon is moved to the front touchscreen region by a drag-and-drop operation.

6. The device of claim 5, wherein the drag-and-drop operation is performed after the side icon is activated in response to a user's input.

7. The device of claim 5 or 6, wherein the front touchscreen region corresponds to a main touchscreen region on which the application program is displayed, and the side touchscreen region corresponds to a sub touchscreen region on which the side icon is displayed.

8. The device of claim 7, wherein the front touchscreen region and the side touchscreen region each have a flat surface shape.

9. The device of claim 7, wherein the front touchscreen region has a flat surface shape, and the side touchscreen region has a curved surface shape.

10. The device of any one of the preceding claims, wherein the touchscreen is flexible.

11. A method of operating an electronic device that includes a touchscreen and a body to which the touchscreen is attached, the method comprising:
displaying an activation icon and a side icon on at least one side touchscreen region of the touchscreen; and
displaying an application program corresponding to the side icon on a front touchscreen region of the touchscreen when the side icon is moved to the activation icon.

12. A method of operating an electronic device that includes a touchscreen and a body to which the touchscreen is attached, the method comprising:
displaying a side icon on at least one side touchscreen region of the touchscreen; and
displaying an application program corresponding to the side icon on a front touchscreen region of the touchscreen when the side icon is moved to the front touchscreen region.

13. The method of claim 12, further comprising activating the side icon in response to a user's input before allowing the side icon to be moved to the front touchscreen region.

14. The method of any one of claims 11 to 13, wherein the front touchscreen region corresponds to a main touchscreen region on which the application program is displayed, and the side touchscreen region corresponds to a subsidiary touchscreen region on which the side icon is displayed.

15. The method of any one of claims 11 to 14, wherein the touchscreen is flexible.
